# EUROPÄISCHE PATENTANMELDUNG

(11) **EP 4 813 547 A1**
(43) Veröffentlichungstag der Anmeldung: **30.09.2026**
(21) Anmeldenummer: 26164886.9
(22) Anmeldetag: 16.03.2026
(51) Int. Cl.: B22F 1/052, B22F 1/06, B22F 3/11, H01M 4/04, H01M 4/24

(54) **ELEKTRODENBAUTEIL, VERFAHREN ZUR HERSTELLUNG EINES ELEKTRODENBAUTEILS UND VERWENDUNG EINES ELEKTRODENBAUTEILS**

(30) Priorität: 26.03.2025 DE 102025111749
(71) Anmelder: Schunk Sintermetalltechnik GmbH, 35452 Heuchelheim (DE)
(72) Erfinder: Ott, Jonas, 35647 Waldsolms (DE); Baumgärtner, Dr. Frank, 35460 Staufenberg (DE)
(74) Vertreter: advotec.

(57) **Zusammenfassung**

Die Erfindung betrifft ein Elektrodenbauteil, ein Verfahren zur Herstellung eines Elektrodenbauteils und eine Verwendung eines Elektrodenbauteils als eine Elektrode für eine Batterie oder eine Elektrode oder eine poröse Transportschicht für einen Elektrolyseur, wobei das Elektrodenbauteil zumindest durch Sintern einer Materialmischung in einer multimodalen Partikelgrößenverteilung (13) hergestellt ist.

## Beschreibung

Die Erfindung betrifft ein Elektrodenbauteil, ein Verfahren zur Herstellung eines Elektrodenbauteils und eine Verwendung eines Elektrodenbauteils.

Ein Elektrodenbauteil ist, insbesondere als eine Elektrode, regelmäßig ein Bestandteil einer Batterie oder eines Elektrolyseurs. Die Batterie kann eine Nickel-Eisen-Batterie bzw. der Elektrolyseur kann ein Nickel-Eisen-Elektrolyseur sein. In diesem Fall ist zumindest eine der Elektroden der Batterie eisenbasiert.

Eine Elektrode auf Eisenbasis wird nach dem folgenden Verfahren hergestellt. Eisen wird zunächst in verdünnter H₂SO₄ gelöst, wobei Eisen(II)-sulfat entsteht. Dieses wird durch Rekristallisation gereinigt und bei 1070 K bis 1120 K geröstet. Die geröstete Masse wird gründlich mit Wasser gewaschen und anschließend getrocknet. Das getrocknete Material wird zur chemischen Reduktion mit Wasserstoff bei 1020 K bis 1070 K behandelt und erneut einer partiellen Oxidation bei 970 K bis 1070 K unterzogen. Das Gemisch wird mit zusätzlichen Mitteln, insbesondere Cu, FeS, HgO usw., vermischt und in Taschen aus mit Nickel beschichtetem Lochblech gefüllt. Die Taschen werden über einer geeigneten vernickelten Stahlplatte befestigt, die die negative Elektrode bildet. So wird die Elektrode auf Eisenbasis hergestellt, unter Verwendung von perforierten Taschen aus nickelplattiertem Stahl. Das aktive Eisenmaterial kann außerdem durch Sintern oder alternativ durch PTFE oder Polyethylen gebunden werden. Ein derartiges Verfahren ist aus der EP 3 289 626 B1 bekannt.

Nachteilhaft bei diesem Verfahren ist, dass dieses insbesondere aufgrund einer Vielzahl von zur Herstellung des Elektrodenbauteils notwendigen Verfahrensschritten aufwendig und somit kostenintensiv ist. Weiter weist das nach diesem Verfahren hergestellte Elektrodenbauteil nur eine vergleichsweise geringe Porosität und damit verbunden nur eine vergleichsweise geringe Durchströmbarkeit auf.

Bei einem weiteren Verfahren zur Herstellung einer eisenbasierten Elektrode erfolgt die Herstellung über sehr feinskalige Pulverrohstoffe, beispielsweise Carbonyleisenpulver, in hoher Reinheit in Verbindung mit Platzhalterwerkstoffen, die eine Porosität erhöhen und eine Durchströmbarkeit der Elektrode sicherstellen sollen.

Nachteilhaft bei diesem Verfahren ist, dass dieses insbesondere aufgrund der Verwendung der Platzhalterwerkstoffe kostenintensiv ist. Weiter weist das nach diesem Verfahren hergestellte Elektrodenbauteil regelmäßig keine ausreichend hohe Porosität und damit verbunden keine ausreichend hohe Durchströmbarkeit auf. Weiter kann eine isolierte, nicht nutzbare Porosität vorliegen. Darüber hinaus können die Platzhalterwerkstoffe ggf. nicht vollständig ausgetragen werden und/oder Lösungsmittel zum Ausbringen der Platzhalterwerkstoffe können eine chemische Reaktion mit dem Eisen eingehen und damit eine Wirksamkeit des Elektrodenbauteils herabsetzen.

Der vorliegenden Erfindung liegt daher die Aufgabe zugrunde, ein Elektrodenbauteil, ein Verfahren zur Herstellung eines Elektrodenbauteils und eine Verwendung eines Elektrodenbauteils vorzuschlagen, welches bzw. welche kostengünstig ist und eine vergleichsweise hohe Porosität aufweist bzw. welches kostengünstig und mit einer vergleichsweise hohen Porosität herstellbar ist.

Diese Aufgabe wird durch ein Elektrodenbauteil mit den Merkmalen des Anspruchs 1, ein Verfahren zur Herstellung eines Elektrodenbauteils mit den Merkmalen des Anspruchs 11 und eine Verwendung eines Elektrodenbauteils mit den Merkmalen des Anspruchs 12 gelöst.

Das erfindungsgemäße Elektrodenbauteil ist zumindest durch Sintern einer Materialmischung in einer multimodalen Partikelgrößenverteilung hergestellt.

Die Herstellung des Elektrodenbauteils erfolgt zumindest durch Sintern einer Materialmischung. Daher ist die Herstellung besonders einfach und damit kostengünstig und in großen Losgrößen möglich. Dabei sind nur vergleichsweise wenige Verfahrensschritte zur Herstellung des Elektrodenbauteils erforderlich. Weiter kann auf Platzhalterwerkstoffe, die einen Herstellungsprozess verlängern und verteuern, je nach Zusammensetzung der Materialmischung verzichtet werden. Ferner können zur Herstellung des Elektrodenbauteils Anlagen aus der Großserienfertigung für Pulvermetallurgie-Produkte verwendet werden. Vor dem Sintern kann ein Formkörper aus der Materialmischung ausgebildet werden. Die Herstellung des Elektrodenbauteils kann daher durch Ausbilden eines Formkörpers aus einer Materialmischung und ein nachfolgendes Sintern des Formkörpers erfolgen. Die Ausbildung des Formkörpers kann durch Pressen der Materialmischung in einer Form bzw. Matrize erfolgen. Die Herstellung des Elektrodenbauteils kann daher durch Pressen einer Materialmischung und ein nachfolgendes Sintern der gepressten Materialmischung erfolgen. Alternativ kann die Ausbildung des Formkörpers durch Schütten der Materialmischung, insbesondere in eine Form bzw. Matrize, erfolgen. Die Herstellung des Elektrodenbauteils kann daher durch Schütten einer Materialmischung und nachfolgendes Sintern der geschütteten Materialmischung bzw. durch Schüttsintern einer Materialmischung erfolgen. Die Herstellung durch Schüttsintern ist besonders kostengünstig. Weiter liegt die Materialmischung bzw. nach dem Sintern der Materialmischung ein Gefüge des Elektrodenbauteils in einer multimodalen, das heißt zumindest bimodalen, Partikelgrößenverteilung vor. Mit anderen Worten kann die Materialmischung bzw. das Gefüge bzw. eine Porenverteilung zumindest in einer ersten Größenfraktion und einer zweiten Größenfraktion vorliegen, wobei eine mittlere Partikelgröße der zweiten Größenfraktion größer als eine mittlere Partikelgröße der ersten Größenfraktion sein kann. Dabei kann sich eine Form von der ersten Größenfraktion angehörenden Partikeln der Materialmischung von einer Form von der zweiten Größenfraktion angehörenden Partikeln der Materialmischung unterscheiden. Infolge der zumindest bimodalen Partikelgrößenverteilung ergibt sich zumindest ein vergleichsweise gröberes Material bzw. Pulver als ein Grundskelett und ein vergleichsweise feineres Material bzw. Pulver, welches an das vergleichsweise gröbere Material bzw. Pulver angesintert wird. Das vergleichsweise gröbere Material bzw. Pulver bildet ein Netzwerk, das klar und eindeutig einen Stromübertragungspfad schafft und eine vergleichsweise hohe elektrische Leitfähigkeit garantiert. Das vergleichsweise feinere Material bzw. Pulver erhöht eine, insbesondere aktive, Oberfläche. Darüber hinaus bilden sich ausreichend offene Poren, die eine Reduktion des Elektrodenbauteils ermöglichen. Daher weist das Elektrodenbauteil auch eine vergleichsweise hohe Porosität auf, welche eine Durchströmbarkeit, insbesondere durch ein Elektrolyt, insbesondere während eines Ladezustands und/oder Entladezustands einer das Elektrodenbauteil umfassenden Batterie, sicherstellt. Zudem weist das Elektrodenbauteil eine vergleichsweise hohe mechanische Festigkeit auf.

Die Materialmischung kann bei einer Temperatur von 400 K bis 1700 K, vorzugsweise 500 K bis 1300 K, weiter vorzugsweise 700 K bis 1150 K, gesintert sein. Die Temperatur kann je nach Zusammensetzung der Materialmischung variieren.

Die Materialmischung kann durch Mischen von Bestandteilen hergestellt sein.

Die Materialmischung kann auch durch Agglomerieren hergestellt sein.

Die Materialmischung kann eine Pulvermaterialmischung sein.

Die Materialmischung kann nur ein Metallpulver oder ein Metallpulvergemisch und/oder Fasern enthalten. Unter einem Metallpulvergemisch wird ein Gemisch von zumindest zwei verschiedenen Metallpulvern verstanden. Die Materialmischung kann also zumindest ein Metallpulver enthalten. Das Metallpulver oder das Metallpulvergemisch kann in der bzw. einer multimodalen, das heißt zumindest bimodalen, Partikelgrößenverteilung vorliegen. Die Materialmischung kann zumindest ein Metallpulver und Fasern, insbesondere Kurzfasern, enthalten. Die Materialmischung kann demnach ein Metallpulver-Faser-Gemisch sein. Unter einem Metallpulver-Faser-Gemisch wird ein Gemisch von zumindest einem Metallpulver und Fasern verstanden. Das Metallpulver-Faser-Gemisch kann in der bzw. einer multimodalen, das heißt zumindest bimodalen, Partikelgrößenverteilung vorliegen. Die Fasern können beispielsweise Kohlenstofffasern sein. Die Materialmischung kann auch frei von Fasern sein.

In einer bevorzugten Ausführungsform kann das Metallpulver aus einer Gruppe umfassend Eisenpulver, insbesondere Carbonyleisenpulver (CIP), Nickelpulver, Titanpulver, Zinkpulver, Aluminiumpulver oder Kupferpulver ausgewählt sein oder das Metallpulvergemisch zumindest ein erstes Metallpulver und ein zweites Metallpulver enthalten, wobei das erste Metallpulver und das zweite Metallpulver aus der Gruppe ausgewählt sein kann. Andere Metallpulversorten als die von der Gruppe umfassten Metallpulversorten sind möglich.

Das Metallpulver bzw. erste Metallpulver und/oder zweite Metallpulver kann ein verdüstes, insbesondere wasserverdüstes, Pulver sein.

Die Materialmischung kann zumindest ein Additiv, insbesondere ein Presshilfsmittel, einen Füllstoff oder einen anderen, insbesondere nichtmetallischen Stoff, enthalten. Das Presshilfsmittel kann vor dem Sintern entfernt werden. Dies ist auf eine einfache Weise möglich. Beispielsweise kann ein Anteil des Presshilfsmittels 5 Vol.-% bis 10 Vol.-% bezogen auf ein Volumen der Materialmischung betragen. Die Materialmischung kann auch durch das Metallpulver oder das Metallpulvergemisch und/oder die Fasern bzw. das Metallpulver-Faser-Gemisch gebildet sein.

Das Metallpulver kann aus einem reinen Metall bestehen oder ein Metalllegierungspulver sein.

Das Metallpulvergemisch kann zumindest ein erstes Metallpulver und ein zweites Metallpulver enthalten. Eine Kombination des ersten Metallpulvers mit dem zweiten Metallpulver kann eine Kombination von Metallpulvern sein, die eigentlich nicht für ein Sinterverfahren vorgesehen ist. Das erste Metallpulver und/oder das zweite Metallpulver kann aus einem reinen Metall bestehen. Das erste Metallpulver und/oder das zweite Metallpulver kann ein Metalllegierungspulver sein. Eine Form der Partikel des ersten Metallpulvers kann sich von einer Form der Partikel des zweiten Metallpulvers unterscheiden. Beispielsweise können die Partikel des ersten Metallpulvers eine kantige bzw. eckige bzw. spratzige Form und die Partikel des zweiten Metallpulvers eine runde bzw. globulistische Form aufweisen.

Das Metallpulver bzw. erste Metallpulver und/oder zweite Metallpulver kann ein beschichtetes Pulver sein. Zur Herstellung kann ein vergleichsweise günstiges Rohpulver, beispielsweise Eisenpulver, über Bedampfungsprozesse, Galvanik oder dergleichen beschichtet werden.

Eine Partikelgröße von Partikeln der Materialmischung, insbesondere des Metallpulvers oder des Metallpulvergemisches, insbesondere des ersten Metallpulvers und des zweiten Metallpulvers, kann 0,1 µm bis 1000 µm betragen. Insbesondere, wenn die Materialmischung Fasern enthält, kann die Partikelgröße der Fasern auch größer sein. Die Partikelgröße kann daher auch bis 100 mm betragen. Die Fasern können als faserförmige Partikel verstanden werden. Eine Faserlänge kann einer Partikelgröße der Fasern entsprechen.

In einer bevorzugten Ausführungsform kann die Materialmischung, insbesondere das Metallpulver oder das Metallpulvergemisch, zumindest in einer ersten Größenfraktion und einer zweiten Größenfraktion vorliegen, wobei eine mittlere Partikelgröße der zweiten Größenfraktion größer als, vorzugsweise zumindest zweimal so groß wie, weiter vorzugsweise zumindest dreimal so groß wie, weiter vorzugsweise zumindest viermal so groß wie, weiter vorzugsweise zumindest fünfmal so groß wie, eine mittlere Partikelgröße der ersten Größenfraktion sein kann. Die mittlere Partikelgröße ist auch als D50 bekannt. Die mittlere Partikelgröße der zweiten Größenfraktion kann zumindest sechsmal so groß, zumindest siebenmal so groß, zumindest achtmal so groß, zumindest neunmal so groß, zumindest zehnmal so groß oder zumindest noch weiter mehrmal, insbesondere fünfzehnmal, zwanzigmal oder dreißigmal, so groß wie die mittlere Partikelgröße der ersten Größenfraktion sein. Der ersten Größenfraktion angehörende Partikel der Materialmischung, insbesondere des Metallpulvers oder des Metallpulvergemisches oder des Metallpulver-Faser-Gemisches, können eine, insbesondere aktive, Oberfläche des Elektrodenbauteils erhöhen. Der zweiten Größenfraktion angehörende Partikel der Materialmischung, insbesondere des Metallpulvers der des Metallpulvergemisches oder des Metallpulver-Faser-Gemisches, können einen Stromübertragungspfad definieren.

Das erste Metallpulver kann in der ersten Größenfraktion und das zweite Metallpulver kann in der zweiten Größenfraktion vorliegen. Demnach können die Partikel des ersten Metallpulvers der ersten Größenfraktion und die Partikel des zweiten Metallpulvers der zweiten Größenfraktion angehören.

Wenn die Materialmischung zumindest ein Metallpulver und Fasern, insbesondere Kurzfasern, bzw. ein Metallpulver-Faser-Gemisch enthält, kann das zumindest eine Metallpulver in der ersten Größenfraktion und die Fasern können in der zweiten Größenfraktion vorliegen. Demnach können die Partikel des zumindest einen Metallpulvers der ersten Größenfraktion und die Fasern der zweiten Größenfraktion angehören.

Beispielsweise kann die mittlere Partikelgröße der ersten Größenfraktion 2 µm bis 8 µm und/oder die mittlere Partikelgröße der zweiten Größenfraktion 20 µm bis 80 µm, vorzugsweise 20 µm bis 60 µm, betragen. In einer Ausführungsform kann die mittlere Partikelgröße der ersten Größenfraktion 4,5 µm und die mittlere Partikelgröße der zweiten Größenfraktion 31,9 µm betragen.

Weiter beispielsweise kann die Partikelgröße der der ersten Größenfraktion angehörenden Partikel 1 µm bis 10 µm und/oder die Partikelgröße der der zweiten Größenfraktion angehörenden Partikel 10 µm bis 100 µm betragen.

In einer bevorzugten Ausführungsform kann ein Anteil der zweiten Größenfraktion bezogen auf ein Volumen der Materialmischung, insbesondere des Metallpulvers oder des Metallpulvergemisches, größer als, vorzugsweise zumindest eineinhalbmal so groß wie, weiter vorzugsweise zumindest zweimal so groß wie, ein Anteil der ersten Größenfraktion bezogen auf das Volumen sein. Das Elektrodenbauteil weist dann insbesondere eine vergleichsweise hohe elektrische Leitfähigkeit auf.

Beispielsweise kann der Anteil der ersten Größenfraktion 10 Vol.-% bis 45 Vol.-% und/oder der Anteil der zweiten Größenfraktion 55 Vol.-% bis 90 Vol.-% betragen. In einer Ausführungsform kann der Anteil der ersten Größenfraktion 40 Vol.-% und der Anteil der zweiten Größenfraktion 60 Vol.-% betragen.

Der Anteil der zweiten Größenfraktion kann auch kleiner als oder genau so groß wie der Anteil der ersten Größenfraktion sein.

In einer bevorzugten Ausführungsform kann die Materialmischung, insbesondere das Metallpulver oder das Metallpulvergemisch oder das Metallpulver-Faser-Gemisch, in einer dritten Größenfraktion vorliegen, wobei eine mittlere Partikelgröße der dritten Größenfraktion größer als, vorzugsweise zumindest zweimal so groß wie, weiter vorzugsweise zumindest dreimal so groß wie, weiter vorzugsweise zumindest viermal so groß wie, weiter vorzugsweise zumindest fünfmal so groß wie, die mittlere Partikelgröße der zweiten Größenfraktion sein kann. Die mittlere Partikelgröße der dritten Größenfraktion kann zumindest sechsmal so groß, zumindest siebenmal so groß, zumindest achtmal so groß, zumindest neunmal so groß, zumindest zehnmal so groß oder zumindest noch weiter mehrmal, insbesondere zwanzigmal oder dreißigmal, so groß wie die mittlere Partikelgröße der zweiten Größenfraktion sein.

Beispielsweise kann die mittlere Partikelgröße der dritten Größenfraktion 300 µm bis 600 µm betragen.

Weiter beispielsweise kann die Partikelgröße der der der dritten Größenfraktion angehörenden Partikel 100 µm bis 800 µm betragen.

In einer bevorzugten Ausführungsform kann der Anteil der ersten Größenfraktion und/oder der Anteil der zweiten Größenfraktion größer als, vorzugsweise zumindest eineinhalbmal so groß wie, vorzugsweise zumindest zweimal so groß wie, ein Anteil der dritten Größenfraktion bezogen auf das Volumen sein.

Beispielsweise kann der Anteil der dritten Größenfraktion > 0 Vol.-% bis 35 Vol.-% betragen.

Der Anteil der ersten Größenfraktion und/oder der Anteil der zweiten Größenfraktion kann auch kleiner als oder genau so groß wie der Anteil der dritten Größenfraktion sein.

Der ersten Größenfraktion angehörende Partikel der Materialmischung können eine kantige bzw. eckige bzw. spratzige Form und der zweiten Größenfraktion angehörende Partikel der Materialmischung können eine runde bzw. globulistische Form aufweisen oder umgekehrt.

In einer bevorzugten Ausführungsform kann das Elektrodenbauteil eine Porosität von 40 % bis 80 % aufweisen.

In einer bevorzugten Ausführungsform kann das Elektrodenbauteil eine Elektrode für eine Batterie, insbesondere Nickel-Eisen-Batterie, oder eine Elektrode oder eine poröse Transportschicht für einen Elektrolyseur, insbesondere Nickel-Eisen-Elektrolyseur, sein. Das Elektrodenbauteil kann auch eine Elektrode für eine Redox-Flow-Batterie oder eine Gasdiffusionsschicht für einen Elektrolyseur oder eine Brennstoffzelle sein. Das Elektrodenbauteil kann auch eine Elektrode für eine Eisen-Luft-Batterie sein. Der Begriff "Batterie" umfasst Akkumulatoren.

Bei dem erfindungsgemäßen Verfahren zur Herstellung eines Elektrodenbauteils wird das Elektrodenbauteil zumindest durch Sintern einer Materialmischung in einer multimodalen Partikelgrößenverteilung hergestellt.

Zu den vorteilhaften Wirkungen des erfindungsgemäßen Verfahrens wird auf die Vorteilsbeschreibung des erfindungsgemäßen Elektrodenbauteils verwiesen.

Weitere vorteilhafte Ausführungsformen des Verfahrens ergeben sich aus den Merkmalsbeschreibungen der auf den Vorrichtungsanspruch 1 rückbezogenen Unteransprüche.

Erfindungsgemäß wird ein Elektrodenbauteil als eine Elektrode für eine Batterie oder eine Elektrode oder eine poröse Transportschicht für einen Elektrolyseur verwendet, wobei das Elektrodenbauteil zumindest durch Sintern einer Materialmischung in einer multimodalen Partikelgrößenverteilung hergestellt ist.

Zu den vorteilhaften Wirkungen der erfindungsgemäßen Verwendung wird auf die Vorteilsbeschreibung des erfindungsgemäßen Elektrodenbauteils verwiesen.

Weitere vorteilhafte Ausführungsformen der Verwendung ergeben sich aus den Merkmalsbeschreibungen der auf den Vorrichtungsanspruch 1 rückbezogenen Unteransprüche.

Nachfolgend wird eine bevorzugte Ausführungsform der Erfindung unter Bezugnahme auf die beigefügten Zeichnungen näher erläutert.

Es zeigen:
- **Fig. 1**: ein Schliffbild eines Elektrodenbauteils;
- **Fig. 2**: eine trimodale Partikelgrößenverteilung.

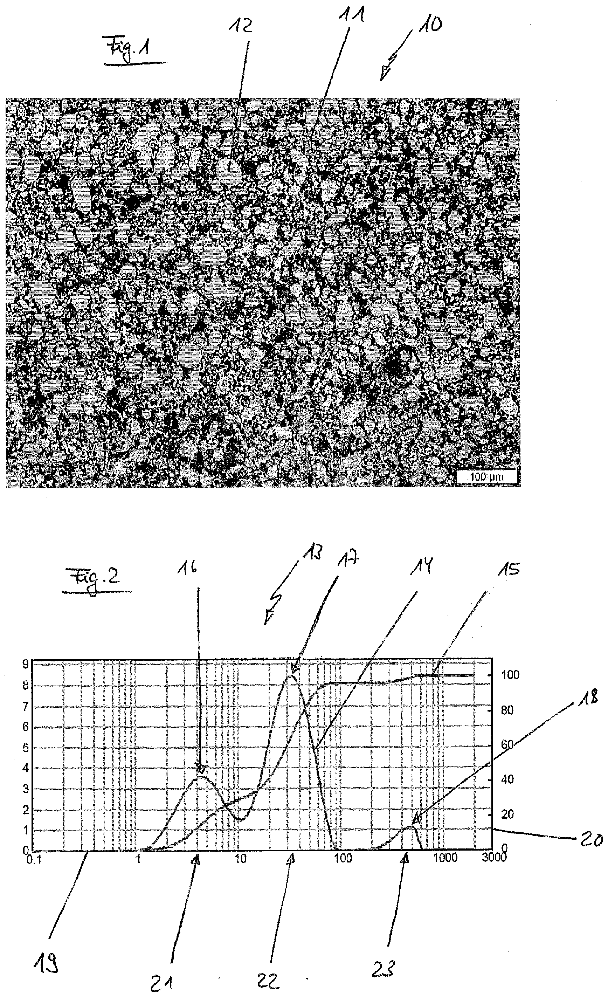

Die **Fig. 1** zeigt ein Schliffbild eines hier nur abschnittsweise gezeigten Elektrodenbauteils 10. Ein Gefüge des Elektrodenbauteils 10 umfasst zumindest einer ersten Größenfraktion angehörende Partikel 11 und einer zweiten Größenfraktion angehörende Partikel 12, wobei eine mittlere Partikelgröße der zweiten Größenfraktion größer als eine mittlere Partikelgröße der ersten Größenfraktion ist. Die Partikel 11 sind an die Partikel 12 angesintert.

Die **Fig. 2** zeigt eine trimodale Partikelgrößenverteilung 13. Zu sehen ist eine logarithmische Dichteverteilungskurve 14 und eine Summenverteilungskurve 15. Die Dichteverteilungskurve 14 weist ein erstes Maximum 16, ein zweites Maximum 17 und ein drittes Maximum 18 auf. Auf einer Abszisse 19 ist die Partikelgröße in µm aufgetragen. Auf einer Ordinate 20 ist ein Anteil in Vol.-% aufgetragen. Ein Abszissenwert 21 des ersten Maximums 16 bzw. ein Abszissenwert 22 des zweiten Maximums 17 bzw. ein Abszissenwert 23 des dritten Maximums 18 entspricht einer mittleren Partikelgröße einer ersten Größenfraktion bzw. einer mittleren Partikelgröße einer zweiten Größenfraktion bzw. einer mittleren Partikelgröße einer dritten Größenfraktion von Partikeln einer Materialmischung, deren Partikelgrößen gemäß der Partikelgrößenverteilung 13 verteilt sind. Die der ersten Größenfraktion angehörenden Partikel können die Partikel eines ersten Metallpulvers der Materialmischung, die der zweiten Größenfraktion angehörenden Partikel können die Partikel eines zweiten Metallpulvers der Materialmischung und die der dritten Größenfraktion angehörenden Partikel können die Partikel eines dritten Metallpulvers der Materialmischung oder eines Presshilfsmittels der Materialmischung sein. Zumindest durch Sintern der Materialmischung kann das Elektrodenbauteil 10 hergestellt werden. Vor dem Sintern kann die Materialmischung gepresst werden. Wenn die der dritten Größenfraktion angehörenden Partikel die Partikel eines Presshilfsmittels sind, so kann das Presshilfsmittel vor dem Sintern entfernt werden. Auch eine Herstellung durch Schüttsintern ist möglich.

## Patentansprüche

1. Elektrodenbauteil (10), wobei das Elektrodenbauteil zumindest durch Sintern einer Materialmischung in einer multimodalen Partikelgrößenverteilung (13) hergestellt ist.

2. Elektrodenbauteil nach Anspruch 1,
**dadurch gekennzeichnet,**
**dass** die Materialmischung nur ein Metallpulver oder ein Metallpulvergemisch und/oder Fasern enthält.

3. Elektrodenbauteil nach Anspruch 2,
**dadurch gekennzeichnet,**
**dass** das Metallpulver aus einer Gruppe umfassend Eisenpulver, insbesondere Carbonyleisenpulver (CIP), Nickelpulver, Titanpulver, Zinkpulver, Aluminiumpulver oder Kupferpulver ausgewählt ist oder das Metallpulvergemisch zumindest ein erstes Metallpulver und ein zweites Metallpulver enthält, wobei das erste Metallpulver und das zweite Metallpulver aus der Gruppe ausgewählt sind.

4. Elektrodenbauteil nach einem der Ansprüche 1 bis 3,
**dadurch gekennzeichnet,**
**dass** die Materialmischung zumindest in einer ersten Größenfraktion und einer zweiten Größenfraktion vorliegt, wobei eine mittlere Partikelgröße der zweiten Größenfraktion größer als, vorzugsweise zumindest zweimal so groß wie, weiter vorzugsweise zumindest dreimal so groß wie, weiter vorzugsweise zumindest viermal so groß wie, weiter vorzugsweise zumindest fünfmal so groß wie, eine mittlere Partikelgröße der ersten Größenfraktion ist.

5. Elektrodenbauteil nach Anspruch 4,
**dadurch gekennzeichnet,**
**dass** ein Anteil der zweiten Größenfraktion bezogen auf ein Volumen der Materialmischung größer als, vorzugsweise zumindest eineinhalbmal so groß wie, weiter vorzugsweise zumindest zweimal so groß wie, ein Anteil der ersten Größenfraktion bezogen auf das Volumen ist.

6. Elektrodenbauteil nach Anspruch 4 oder 5,
**dadurch gekennzeichnet,**
**dass** Materialmischung in einer dritten Größenfraktion vorliegt, wobei eine mittlere Partikelgröße der dritten Größenfraktion größer als, vorzugsweise zumindest zweimal so groß wie, weiter vorzugsweise zumindest dreimal so groß wie, weiter vorzugsweise zumindest viermal so groß wie, weiter vorzugsweise zumindest fünfmal so groß wie, die mittlere Partikelgröße der zweiten Größenfraktion ist.

7. Elektrodenbauteil nach Anspruch 6,
**dadurch gekennzeichnet,**
**dass** der Anteil der ersten Größenfraktion und/oder der Anteil der zweiten Größenfraktion größer als, vorzugsweise zumindest eineinhalbmal so groß wie, weiter vorzugsweise zumindest zweimal so groß wie, ein Anteil der dritten Größenfraktion bezogen auf das Volumen ist.

8. Elektrodenbauteil nach einem der Ansprüche 4 bis 7,
**dadurch gekennzeichnet,**
**dass** der ersten Größenfraktion angehörende Partikel der Materialmischung eine kantige Form und der zweiten Größenfraktion angehörende Partikel der Materialmischung eine runde Form aufweisen oder umgekehrt.

9. Elektrodenbauteil nach einem der vorangehenden Ansprüche,
**dadurch gekennzeichnet,**
**dass** das Elektrodenbauteil (10) eine Porosität von 40 % bis 80 % aufweist.

10. Elektrodenbauteil nach einem der vorangehenden Ansprüche,
**dadurch gekennzeichnet,**
**dass** Elektrodenbauteil (10) eine Elektrode für eine Batterie oder eine Elektrode oder eine poröse Transportschicht für einen Elektrolyseur ist.

11. Verfahren zur Herstellung eines Elektrodenbauteils (10), wobei das Elektrodenbauteil zumindest durch Sintern einer Materialmischung in einer multimodalen Partikelgrößenverteilung (13) hergestellt wird.

12. Verwendung eines Elektrodenbauteils (10) als eine Elektrode für eine Batterie oder eine Elektrode oder eine poröse Transportschicht für einen Elektrolyseur, wobei das Elektrodenbauteil zumindest durch Sintern einer Materialmischung in einer multimodalen Partikelgrößenverteilung (13) hergestellt ist.
